# EUROPÄISCHE PATENTANMELDUNG

(11) **EP 0 669 119 A1**
(43) Veröffentlichungstag der Anmeldung: **30.08.1995**
(21) Anmeldenummer: 95250006.4
(22) Anmeldetag: 13.01.1995
(51) Int. Cl.: A61F 9/08

(54) **Leitgerät**

(30) Priorität: 26.01.1994 DE 4402764
(71) Anmelder: SIEMENS AKTIENGESELLSCHAFT, 80333 München (DE)
(72) Erfinder: Fischer, Uwe, D-10179 Berlin (DE); Fischer, Jörg, D-10247 Berlin (DE); Buggermann, Oliver, D-16761 Hennigsdorf (DE)

(57) **Zusammenfassung**

Das Leitgerät soll in ihrer visuellen Wahrnehmung beeinträchtigten Personen mit einfachen Mitteln eine zuverlässige Orientierung in ihrer Umgebung ermöglichen.

Das Leitgerät enthalt eine Auswerteeinrichtung (6), die bei einer Frequenzdifferenz zwischen einem ausgesendeten und dem daraufhin empfangenen, von der Umgebung reflektierten Radarsignal (71) ein Steuersignal (ST1) erzeugt. Ein Klopfsignalgeber (50) erzeugt bei Beaufschlagung mit dem Steuersignal (ST1) fühlbare Klopfbewegungen auf den Hinterkopfbereich (72) der Person (60).

## Beschreibung

Die Erfindung betrifft ein Leitgerät, insbesondere Blindenleitgerät, zur Orientierung einer Person in ihrer Umgebung, das folgende an einer Kopfbedekkung angeordnete Elemente aufweist: einen Sender zum Aussenden eines Signals, einen Empfänger zum Empfang eines daraufhin an einem Hindernis der Umgebung reflektierten Signals und eine Auswerteeinrichtung, die über ein Steuersignal einen Signalgeber ansteuert.

In der visuellen Wahrnehmung ihrer Umgebung beeinträchtigte und blinde Personen benötigen vor allem in unbekannter Umgebung eine Orientierungshilfe, die sie bei Bewegung vor Hindernissen und vor bewegten Objekten warnt. Dabei sollte die Person insbesondere vor Objekten in Kopfhöhe (z.B. offene Schranktüren) und in Bauchhöhe (z. B. Tische) zuverlässig gewarnt werden, weil diese Gefahrenquellen beispielsweise mit einem Blindenstock nur schwer wahrnehmbar sind.

Ein vor diesem Hintergrund verbesserter, aus der DE-A1-40 04 438 bekannter Blindenstab enthält Sensoren zur Erfassung und Messung von Entfernungen zu Objekten. Die Meßwerte werden an den Benutzer über einen Kopfhörer akustisch oder in nicht näher erläuterter Weise mechanisch weitergegeben. Der Blindenstock muß als separate Hilfe gehandhabt werden, so daß die Handlungsfreiheit des Benutzers eingeschränkt ist.

Aus der DE-A1-22 61 975 ist ein vergleichsweise auffälliges Gerät mit einer Vielzahl von Pulsatoren bekannt, die in einzelnen Fassungen eines Rahmens auf einem Teilkreis mittels Feststellstiften bezüglich der Stirn des Benutzers positionierbar sind.

Eine aus der DE-A1-37 43 696 bekannte Orientierungshilfe setzt von einem Sender ausgesendete, an einem Hindernis reflektierte und von einem Empfänger empfangene Meßsignale in akustische Signale um. Nach Ortung eines Hindernisses werden dessen Umrisse durch einen frei bewegbaren Infrarotstrahl abgetastet. Reflektierte Anteile des Infrarotstrahls werden in akustische Signale mit unterschiedlichen Klangfarben als Maß für die Entfernung und unterschiedlichen Amplituden als Maß für die Objektgröße umgesetzt. Die Bedienung des Infrarotstrahls und die Auswertung der akustischen Signale belastet die jeweilige Person. Außerdem ist die Wahrnehmungsfähigkeit für weitere gleichzeitig auftretende akustische Informationen beeinträchtigt.

Aus der DE-A1-28 16 530 ist ein Leitgerät bekannt, dessen Ausgangssignal sich sprunghaft beim Unterschreiten eines vorgewählten Abstandswertes zwischen dem Leitgerät und einem Hindernis ändert. Die Frequenz des Ausgangssignals ist dabei ein Maß für den Abstand. Das Ausgangssignal kann in eine mechanische Schwingung umgesetzt werden, wobei Übertragungsart und Übertragungsort dieser Schwingung nicht näher beschrieben sind.

Ein aus der DE-A1-39 42 093 bekanntes Leitgerät der eingangs genannten Art bildet in der Umgebung befindliche Hindernisse als virtuelle Geräuschquellen ab. Dazu werden die von einem Sender ausgesendeten und an einem Hindernis reflektierten Signale von auf einem Teilkreis angeordneten Empfängen empfangen und für eine zweikanalige akustische Ausgabe aufbereitet. Dabei repräsentiert die jeweilige Frequenz die Entfernung und die Verteilung der Amplitude auf die beiden Kanäle die Hindernisposition. Die Wahrnehmung der zweikanaligen akustischen Abbildung der Umgebung erfordert von dem Benutzer eine hohe Konzentration. Die auch in statischen Situationen kontinuierliche akustische Informationsübermittlung schließt weitere auditive Wahrnehmungen der Umgebung so gut wie aus.

Die Aufgabe der vorliegenden Erfindung besteht daher in der Schaffung eines Leitgeräts, das besonders unauffällig ist und sowohl eine zuverlässige Informationsgewinnung als auch eine zuverlässige, unauffällige Übertragung der gewonnenen Information an die Person gewährleistet. Die Informationsübertragung soll dabei die übrigen, insbesondere akustischen, Sinneswahrnehmungen der Person nicht beeinträchtigen.

Diese Aufgabe wird bei einem Leitgerät der eingangs genannten Art erfindungsgemäß dadurch gelöst, daß die Auswerteeinrichtung bei Frequenzdifferenz zwischen dem gesendeten und dem daraufhin empfangenen Signal ein Steuersignal erzeugt, daß der Signalgeber ein Klopfsignalgeber ist, der bei Ansteuerung Klopfbewegungen ausführt, und daß der Klopfsignalgeber derart am hinteren Bereich der Kopfbedeckung angeordnet ist, daß seine Klopfbewegungen auf die Hautoberfläche des Hinterkopfbereichs der Person wirken.

Als Sender für das Leitgerät ist eine Infrarotstrahlungsquelle denkbar; allerdings sind die auswertbaren Reflexionen im Infrarotbereich von der Farbe und der Oberflächenbeschaffenheit der reflektierenden Objekte abhängig. Beim Einsatz einer Ultraschallquelle müssen ggf. im Ultraschallfrequenzbereich von Störgeräuschquellen erzeugte Fehlsignale ausgefiltert werden. Es werden bevorzugt auf Radarfrequenz arbeitende Sender und Empfänger eingesetzt, weil Radarfrequenzen (GHz-Bereich) gegenüber äußeren Störeinflüssen weitestgehend unempfindlich sind, in ihren Reflexionseigenschaften von der Oberflächenbeschaffenheit und der Farbe des reflektierenden Objekts unabhängig sind und ein ausreichend weites Erfassungsspektrum der Umgebung ermöglichen. Durch die Abstrahlcharakteristik der Radarsignale werden Steuersignale sowohl bei Relativbewegungen in normaler als auch in paralleler Richtung zum Objekt erzeugt.

Ein besonderer Vorteil der Erfindung liegt darin, daß durch die Auswertung der Frequenzdifferenz zwischen dem ausgesendeten und dem daraufhin von der Umgebung reflektierten Signal nur bei einer Relativbewegung zwischen dem Leitgerät und (Objekten) der Umgebung Steuersignale erzeugt werden. Das Leitgerät warnt somit zuverlässig bei Annäherung an ein Hindernis und/oder bei bewegten Hindernissen, ohne bei statischen Verhältnissen durch Abgabe von Signalen zu belasten. Ein weiterer wesentlicher Vorteil der Erfindung besteht darin, daß das als Kopfbedeckung unauffällig und bequem zu tragende Leitgerät über den Klopfsignalgeber auf die Hautoberfläche im Hinterkopfbereich der Person und damit an einer besonders unauffälligen Stelle mechanisch wirkt. Vorteilhafterweise ist eine zuverlässige Informationsübertragung von dem Leitgerät auf die Person ohne Beeinträchtigung der übrigen Sinneswahrnehmungen ermöglicht. Bei eingeschränkter visueller Wahrnehmung sind die übrigen, insbesondere die akustischen, Wahrnehmungen nämlich von erheblich gesteigerter Bedeutung.

Vorzugsweise ist auch eine Energieversorgung an der Kopfbedeckung angeordnet. Nach einer vorteilhaften Fortbildung der Erfindung ist zur Unterstützung der Energieversorgung und/oder zum Laden einer wiederaufladbaren Energieversorgung vorgesehen, daß die Kopfbedeckung Solarzellen trägt, die die Energieversorgung speisen.

Eine besonders elegante und kompakte Ausgestaltung des erfindungsgemäßen Leitgeräts sieht vor, daß der Sender und der Empfänger in einem Modul enthalten sind, das auf einem Schirm im vorderen Bereich einer Schirmmütze angeordnet ist.

Zur Erweiterung des von dem erfindungsgemäßen Leitgerät vermittelten Umgebungseindruckes sieht eine vorteilhafte Ausgestaltung der Erfindung einen weiteren Sender und einen weiteren Empfänger, vorzugsweise einen weiteren Radarsignalsender und einen weiteren Radarsignalempfänger, vor, die an einem Gürtel angeordnet sind.

Um einen besonders differenzierten Eindruck über die vertikale Ausdehnung eines Hindernisses zu vermitteln, sind bei einer vorteilhaften Fortbildung der Erfindung weiterhin vorgesehen: eine weitere Auswerteeinrichtung, die bei Frequenzdifferenz zwischen einem von dem weiteren Sender ausgesendeten und einem daraufhin von dem weiteren Empfänger empfangenen, von der Umgebung reflektierten Signal ein weiteres Steuersignal erzeugt, und durch einen weiteren Klopfsignalgeber, der derart am hinteren Bereich der Kopfbedeckung angeordnet ist, daß seine bei Beaufschlagung mit dem weiteren Steuersignal ausgeführten Klopfbewegungen auf die Hautoberfläche im Hinterkopfbereich der Person wirken.

Zur optimalen Anpassung des erfindungsgemäßen Leitgeräts an die umgebungsbedingten Anforderungen ist nach einer vorteilhaften Ausbildung der Erfindung vorgesehen, daß die Empfindlichkeit der Auswerteeinrichtung und/oder der weiteren Auswerteeinrichtung einstellbar ist. Vorzugsweise sind die Empfindlichkeiten auf einen Nahbereich (z. B. bis ca. 1,5 m Hindernisabstand) und einen Fernbereich (z. B. bis 5 m Hindernisabstand) einstellbar.

Eine besonders angenehme und wenig belastende Wahrnehmung der auf den Hinterkopfbereich der Person wirkenden Signale und eine geringe Beanspruchung des Signalgebers lassen sich erreichen, wenn die vom Signalgeber abgegebenen Signale eine Höchstfrequenz von vorzugsweise ca. 10 Hz nicht überschreiten. Dazu sieht eine weitere vorteilhafte Ausgestaltung der Erfindung vor, daß das Steuersignal und/oder das weitere Steuersignal ein periodisches Signal mit einer vorgebbaren Mindestperiodendauer ist.

Ein Ausführungsbeispiel der Erfindung wird nachfolgend anhand einer Zeichnung naher erläutert; es zeigen:
Figuren 1A und 1B ein erfindungsgemäßes Leitgerät in Seiten- und Frontansicht,
Figuren 2A und 2B die Wirkungsweise des Leitgeräts,
Figur 3 Details der Figuren 2A und 2B,
Figur 4 den schaltungstechnischen Aufbau und
Figur 5 ein Schaltungsbeispiel einer Auswerteeinrichtung des Leitgeräts.

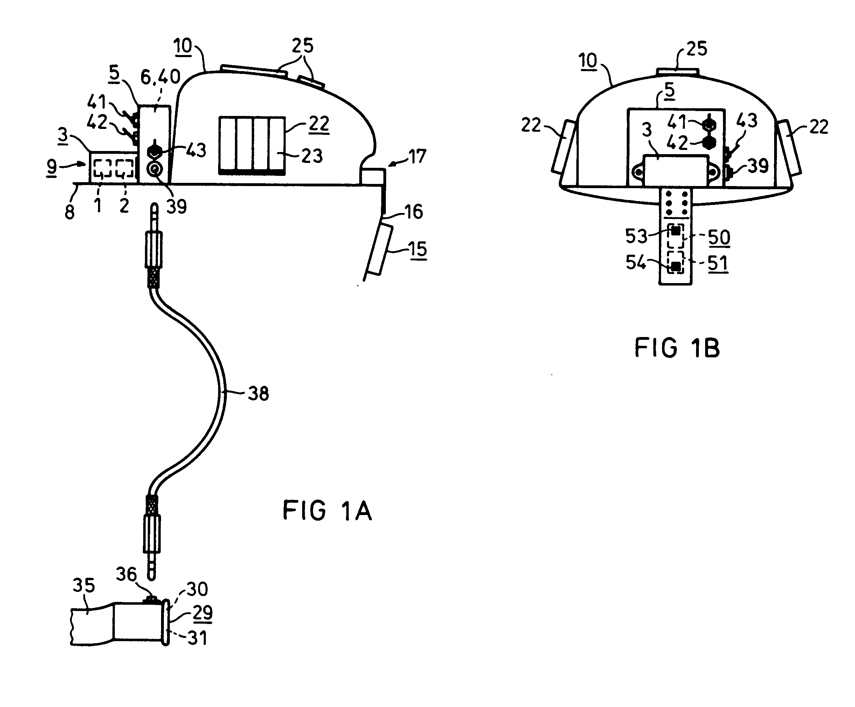

Das in den Figuren 1A und 1 B gezeigte Leitgerät enthält einen ersten Radarsignalsender 1 und einen ersten Radarsignalempfänger 2, die in einem Radarmodul 3 angeordnet sind. Das Radarmodul 3 ist einem Gehäuse 5 vorgelagert, in dem sich eine Auswerteeinrichtung 6 befindet. Das Radarmodul 3 und das Gehäuse 5 sind auf einem Schirm 8 im vorderen Bereich 9 einer als Schirmmütze ausgebildeten Kopfbedeckung 10 angeordnet. Die Auswerteeinrichtung 6 ist über nicht gezeigte elektrische Steuerleitungen mit einer Signaleinheit 15 verbunden, die an einer Halterung 16 im hinteren Bereich 17 der Kopfbedeckung 10 fixiert ist. Eine Energieversorgung 22 besteht aus mehreren wiederaufladbaren Akkumulatoren 23 und ist über nicht dargestellte Versorgungsleitungen mit der Auswerteeinrichtung 6 und dem Radarmodul 3 verbunden. Auf der Kopfbedeckung 10 sind mehrere Solarzellen 25 vorgesehen, die die Energieversorgung 22 speisen und zur Unterstutzung bzw. Wiederaufladung der Akkumulatoren 23 beitragen.

Ein zweites Radarmodul 29 enthält einen zweiten Radarsignalsender 30 und einen zweiten Radarsignalempfänger 31 und ist an einem Gürtel 35 befestigt. Das Radarmodul 29 ist über eine Buchse 36, ein Verbindungskabel 38 und eine Buchse 39 am Gehäuse 5 an die Energieversorgung 22 anschließbar. Das Radarmodul 29 kann über das Verbindungskabel 38 ebenfalls an die Auswerteeinrichtung 6 angeschlossen sein; bevorzugt ist es jedoch mit einer weiteren Auswerteeinrichtung 40 verbunden. Über einen ersten Kippschalter 41 ist das erste und über einen zweiten Kippschalter 42 ist das zweite Radarmodul 3, 29 aktivierbar. Ein weiterer Kippschalter 43 dient zur Einstellung der Empfindlichkeiten der Auswerteeinrichtungen 6, 40 und damit zur Einstellung des Erfassungsbereichs des Leitgeräts. Die Position der Kippschalter 41, 42, 43 ist einfach ertastbar.

Dem ersten Radarsignalempfänger 2 und der ersten Auswerteeinrichtung 6 ist ein erster Klopfsignalgeber 50 und dem zweiten Radarsignalempfänger 31 und der zweiten Auswerteeinrichtung 40 ist ein zweiter Klopfsignalgeber 51 zugeordnet. Die Klopfsignalgeber 50, 51 sind in der Signaleinheit 15 enthalten und haben elektromagnetisch bewegbare Klopfstößel 53, 54.

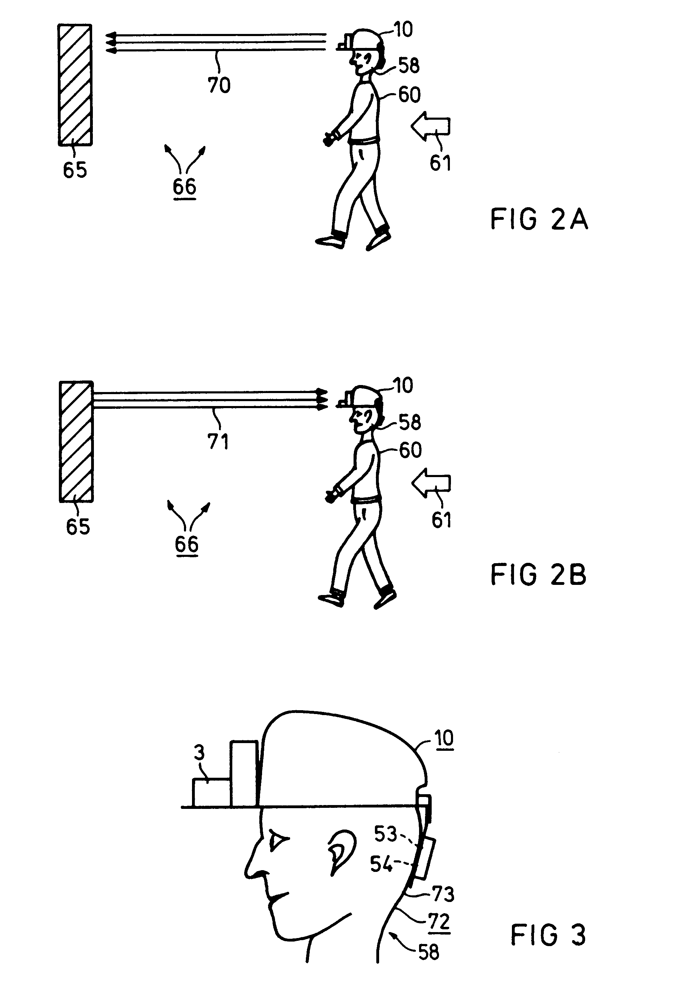

Die Figuren 2A und 2B zeigen eine auf ihrem Kopf 58 das Leitgerät tragende Person 60, die sich in Richtung des Pfeils 61 auf ein feststehendes Hindernis 65 zu bewegt. Von dem Radarsignalsender 1 werden Radarsignale 70 ausgesendet, die von dem Hindernis 65 in der Umgebung 66 der Person 60 reflektiert werden und als reflektierte Radarsignale 71 zur Person 60 und damit zum Radarsignalempfänger 2 zurückgelangen. Aufgrund der Relativbewegung zwischen dem Hindernis 65 und der Person weisen die empfangenen Radarsignale 71 eine von der Relativbewegungsgeschwindigkeit abhängige Frequenzerhöhung auf.

Figur 3 zeigt detailliert den Sitz der Kopfbedekkung 10 auf dem Kopf 58. Die Klopfstößel 53, 54 (Figur 1B) sind auf den Hinterkopfbereich 72 der Person 60 ausgerichtet. Wenn der bzw. die Signalgeber 50, 51 angesteuert werden, üben die Klopfstößel 53, 54 intermittierend mechanischen Druck auf die Hautoberfläche 73 des Hinterkopfbereichs 72 aus.

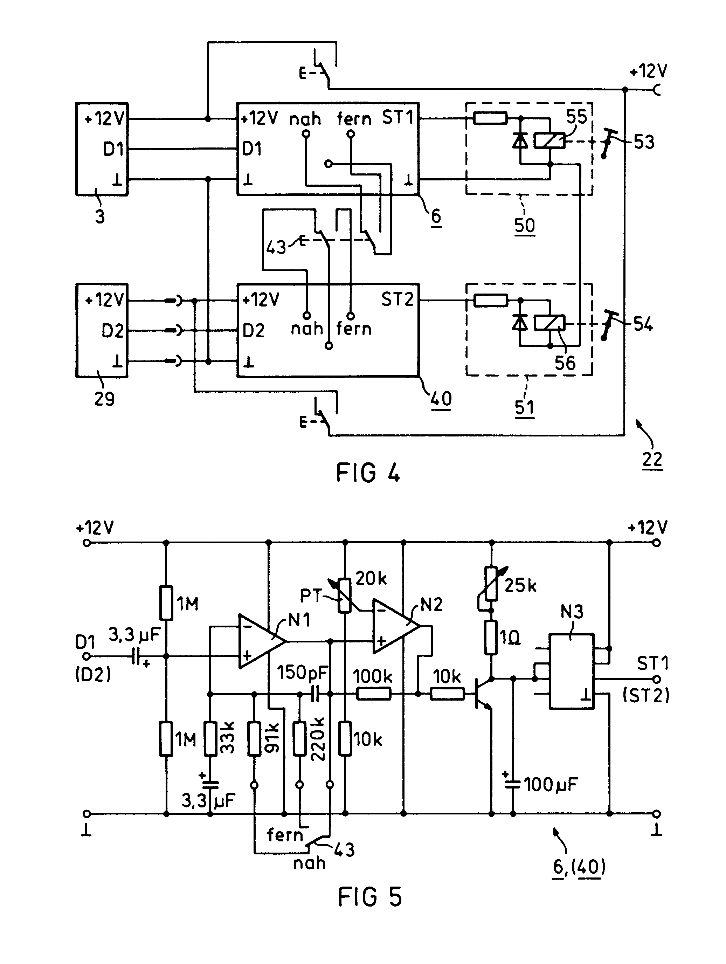

Figur 4 zeigt schematisch handelsübliche Radarmodule 3, 29, die z.B. unter der Bezeichnung SMX1 (Liefercode (Q62702-R309) von der Siemens AG angeboten werden und die mit einer Frequenz von 9,35 GHz arbeiten. Bei einer Frequenzdifferenz zwischen dem ausgesendeten 70 und dem empfangenen Radarsignal 71 (Figuren 2A, 2B) werden die Auswerteeinrichtungen 6, 40 eingangsseitig mit von den Radarmodulen 3, 40 erzeugten Signalen D1, D2 beaufschlagt, die eine der Frequenzdifferenz entsprechende Frequenz aufweisen. Die Auswerteeinrichtungen 6, 40 stellen ausgangsseitig Ansteuersignale ST1, ST2 für die Klopfsignalgeber 50, 51 zur Verfügung. Die Klopfsignalgeber 50, 51 weisen einen relaisähnlichen Aufbau mit einem Elektromagneten 55 bzw. 56 auf, dessen Zuganker den jeweiligen Klopfstößel 53 bzw. 54 entgegen einer Federrückstellkraft bewegt.

Figur 5 zeigt detailliert die Schaltung der Auswerteeinrichtungen 6 bzw. 40. Die Schaltung umfaßt eine Filterstufe mit einem Operationsverstärker N1 zum Ausfiltern von Störfrequenzen, die beispielsweise von Leuchtstoffröhren in der Umgebung erzeugt werden können. Durch den Schalter 43 wird die Rückkopplung des Operationsverstärkers N1 und damit der Verstärkungsfaktor verändert; so läßt sich die Empfindlichkeit der Auswerteschaltung auf einen Nahbereich (z. B. bis 1,5 m) und einen Fernbereich (z. B. bis 5 m) einstellen.

Ein über ein Potentiometer PT in seinem Schwellwert einstellbarer weiterer Operationssverstärker N2 (Komparator) wandelt das Filterstufen-Ausgangssignal in ein (schwellwertabhängiges) Rechtecksignal um und führt dieses einer monostabilen Kippstufe N3 zu. Die Kippstufe N3 begrenzt die Frequenz des ausgangsseitig während der Dauer des Signals D1 periodisch abgegebenen Steuersignals ST1 (bzw. ST2 der Auswerteeinrichtung 40) auf eine vorgegebene Mindestperiodendauer. Dadurch wird die Frequenz der Klopfimpulse der Signalgeber 50, 51 auf einen physiologisch optimalen Wert begrenzt. Außerdem wird eine Überbeanspruchung der Klopfsignalgeber vermieden.

Durch die bevorzugt in Kopfhöhe und Bauchhöhe (Gürtel) angeordneten Radarmodule 3, 29 und über die separaten Klopfsignalgeber 50, 51 sind Hindernisse hinsichtlich ihrer vertikalen Position zuverlässig differenzierbar. Der veränderbare Erfassungsbereich und das wahlweise Einschalten eines oder beider Radarmodule erlauben eine optimale Anpassung des Leitgeräts an die umgebungs-und situationsbedingten Anforderungen. Die von den Klopfsignalgebern an den Hinterkopfbereich abgegebenen Klopfimpulse sind gegenüber anderen Umwelteindrücken differenziert und gut wahrnehmbar, ohne die übrigen, insbesondere taktilen und akustischen, Wahrnehmungsmöglichkeiten einzuschränken. Das Leitgerät gibt nur dann Signale ab, wenn sich das Leitgerät und ein mögliches Hindernis relativ zueinander bewegen; dadurch kann die Person auch durch Kopfbewegungen die benötigten Informationen über ihre Umgebung erhalten.

## Patentansprüche

1. Leitgerät, insbesondere Blindenleitgerät, zur Orientierung einer Person (60) in ihrer Umgebung (66), das folgende an einer Kopfbedekkung (10) angeordnete Elemente aufweist: einen Sender (1) zum Aussenden eines Signals (70), einen Empfänger (2) zum Empfang eines daraufhin an einem Hindernis (65) der Umgebung (66) reflektierten Signals (71) und eine Auswerteeinrichtung (6), die über ein Steuersignal (ST1) einen Signalgeber (50) ansteuert, dadurch gekennzeichnet, daß die Auswerteeinrichtung (6) bei Frequenzdifferenz zwischen dem gesendeten (70) und dem daraufhin empfangenen Signal (71) ein Steuersignal (ST1) erzeugt, daß der Signalgeber (50) ein Klopfsignalgeber ist, der bei Ansteuerung Klopfbewegungen ausführt, und daß der Klopfsignalgeber derart am hinteren Bereich (17) der Kopfbedeckung (10) angeordnet ist, daß seine Klopfbewegungen auf die Hautoberfläche (73) des Hinterkopfbereichs (72) der Person (60) wirken.

2. Leitgerät nach Anspruch 1,
dadurch gekennzeichnet, daß die Kopfbedeckung (10) Solarzellen (25) trägt, die eine Energieversorgung (22) speisen.

3. Leitgerät nach Anspruch 1 oder 2,
dadurch gekennzeichnet, daß der Sender (1) und der Empfänger (2) in einem Modul (3) enthalten sind, das auf einem Schirm (8) im vorderen Bereich (9) einer Schirmmütze angeordnet ist.

4. Leitgerät nach einem der vorangehenden Ansprüche, gekennzeichnet durch einen weiteren Sender (30) und einen weiteren Empfänger (31), die an einem Gürtel (35) angeordnet sind.

5. Leitgerät nach Anspruch 4,
gekennzeichnet durch eine weitere Auswerteeinrichtung (40), die bei Frequenzdifferenz zwischen einem von dem weiteren Sender (30) ausgesendeten und einem daraufhin von dem weiteren Empfänger (31) empfangenen, von der Umgebung (66) reflektierten Signal ein weiteres Steuersignal (ST2) erzeugt, und durch einen weiteren Klopfsignalgeber (51), der derart am hinteren Bereich (17) der Kopfbedeckung (10) angeordnet ist, daß seine bei Beaufschlagung mit dem weiteren Steuersignal (ST2) ausgeführten Klopfbewegungen auf die Hautoberfläche (73) im Hinterkopfbereich (72) der Person (60) wirken.

6. Leitgerät nach einem der vorangehenden Ansprüche, dadurch gekennzeichnet, daß die Empfindlichkeit der Auswerteeinrichtung (6) und/oder der weiteren Auswerteeinrichtung (40) einstellbar ist.

7. Leitgerät nach einem der vorangehenden Ansprüche, dadurch gekennzeichnet, daß das Steuersignal (ST1) und/oder das weitere Steuersignal (ST2) ein periodisches Signal mit einer vorgebbaren Mindestperiodendauer ist.
